# EUROPEAN PATENT APPLICATION

(11) **EP 2 015 035 A1**
(43) Date of publication of application: **14.01.2009**
(21) Application number: 07742737.5
(22) Date of filing: 01.05.2007
(51) Int. Cl.: G01F 23/28, G01N 35/10

(54) **LIQUID LEVEL DETECTING APPARATUS**

(30) Priority: 01.05.2006 JP 2006127638
(71) Applicant: Olympus Corporation, Tokyo 151-0072 (JP)
(72) Inventor: KOJIMA, Keijiro, Tokyo 151-0072 (JP)
(74) Representative: von Hellfeld, Axel
(86) International application number: PCT/JP2007/059302
(87) International publication number: WO 2007/129639

(57) **Abstract**

To provide a liquid level detecting apparatus which can detect a liquid surface of a liquid stored in a vessel regardless of a material and arrangement of the vessel.

A liquid level detecting apparatus 10 of the present invention takes an image of an inside of a vessel 13 from a predetermined position where an opening edge 14 of the vessel and a liquid surface 15 come into an imaging range, and determines whether a distance between the opening edge 14 of the vessel and the liquid surface 15 in a taken image is within a preset threshold range or not. The liquid level detecting apparatus 10 of the present invention can detect a position of the liquid surface in a metallic vessel which does not transmit light, and in vessels formed and arranged in a matrix.

## Description

### TECHNICAL FIELD

The present invention relates to a liquid level detecting apparatus employed for an automatic analyzer and a dispenser.

### BACKGROUND ART

In an automatic analyzer which analyzes a specimen such as blood and bodily fluid utilizing immunological agglutination reaction and the like, fluctuation in a dispensed amount of a specimen and a reagent in a reaction vessel relative to a specified amount significantly affects a result of analysis and degrades reliability of inspection and analysis. Therefore, it is necessary to establish a technology for measuring a dispensed amount with high accuracy and selecting only the dispensed specimens whose amount is within a suitable range from plural dispensed specimens. One way to measure the dispensed amount is to detect the level of a liquid surface. Known techniques for detecting the liquid level include those employ electric conductivity measurement using an electrode, and those employ ultrasonic determination.

A liquid level detector adopting the electric conductivity measurement using an electrode has a difficulty, however, in inserting the electrode into a vessel with a small-diameter opening, and tends to cause errors in detected liquid amount because of the contact between the electrode and the liquid surface. Further, a liquid level detector adopting the ultrasonic determination cannot obtain a correct measurement value because ultrasonic waves emitted from an ultrasonic sensor diffuse and a part of the diffused ultrasonic waves hits and is reflected by an opening edge of the vessel to be detected by the ultrasonic sensor.

Unlike the liquid level detectors described above, a liquid level detecting apparatus disclosed in Patent Document 1 detects a liquid level by using a light source and a CCD camera arranged on respective sides of a vessel containing a liquid and measuring the intensity of light transmitted through the vessel. The liquid level detecting apparatus of Patent Document 1 can correctly detect the surface level of a liquid stored in a vessel with a small-diameter opening.

Patent Document 1: Japanese Patent Application Laid-Open No. H7-120292

### DISCLOSURE OF INVENTION

### PROBLEM TO BE SOLVED BY THE INVENTION

However, because the liquid level detecting apparatus of Patent Document 1 detects the level of a liquid surface by measuring the light transmitted through a side wall of the vessel, the apparatus cannot detect the liquid level when an employed vessel does not transmit light, for example, when a metallic vessel is employed, or when plural reaction vessels are formed and arranged in a matrix as in a microplate.

In view of the above, an object of the present invention is to provide a liquid level detecting apparatus which can detect the position of a liquid surface of a liquid stored in a vessel regardless of a material and arrangement of the vessel.

### MEANS FOR SOLVING PROBLEM

A liquid level detecting apparatus according to the present invention is a liquid level detecting apparatus for detecting a liquid surface of a liquid stored in a vessel, and takes an image of an inside of the vessel from a predetermined position where an opening edge of the vessel and the liquid surface come into an imaging range, and determines whether a distance between the opening edge of the vessel and the liquid surface in a taken image is within a preset threshold range or not.

Further, in the liquid level detecting apparatus according to claim 2, in an aspect as described in claim 1, an imager for taking an image of the opening edge of the vessel and the liquid surface is arranged obliquely upward of the vessel.

### EFFECT OF THE INVENTION

Because the liquid level detecting apparatus of the present invention detects the position of the liquid surface by taking an image of an inside of a vessel from a predetermined position where the opening edge of the vessel and the liquid surface come into the imaging range, the liquid level detecting apparatus of the present invention can detect the position of the liquid surface of a liquid in a metallic vessel which does not transmit light, or in a vessel formed and arranged in a matrix. As a result, only the specimen whose dispensed amount is within a suitable range can be selected, whereby the analysis can be performed with higher accuracy.

### BRIEF DESCRIPTION OF DRAWINGS

FIG. 1 is a diagram of an analysis process of an automatic analyzer to which a liquid level detecting apparatus of the present invention is applied;
FIG. 2-1 is a plan view of a microplate which is applied to the liquid level detecting apparatus of the present invention;
FIG. 2-2 is a sectional view along line A-A of FIG. 2-1;
FIG. 3 is a schematic diagram of a configuration of a liquid level detecting apparatus 10 according to the present invention; and
FIG. 4 is a diagram of an example of an imaging range of a CCD camera.

### EXPLANATIONS OF LETTERS OR NUMERALS

- 10: Liquid level detecting apparatus
- 12: Microplate
- 13: Reaction vessel
- 14: Opening edge of vessel
- 15: Liquid surface

### BEST MODE(S) FOR CARRYING OUT THE INVENTION

Exemplary embodiments of a liquid level detecting apparatus according to the present invention are described in detail below.

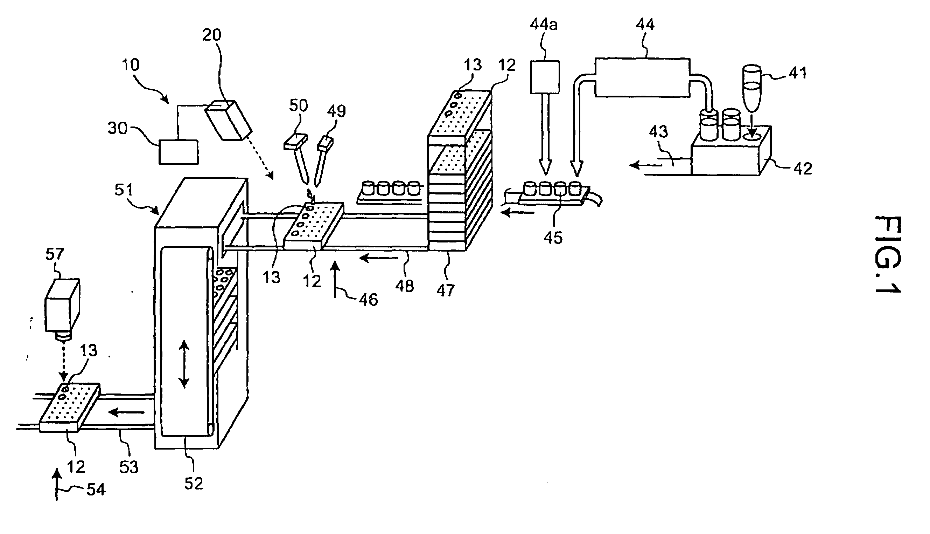

FIG. 1 is a diagram of an analysis process of an automatic analyzer to which a liquid level detecting apparatus 10 of the present invention is applied. The automatic analyzer illustrated below serves to analyze an antigen-antibody reaction of examined blood utilizing immunological agglutination reaction. Firstly, an outline of the analysis process of the automatic analyzer is described.

Blood collected from an examinee is stored in a test tube 41. The test tubes 41 are placed in a rack 42, and transported by a transporter 43 such as a belt conveyor to a blood dispenser 44 arranged at a blood-dispensing position and to a dilute solution dispenser 44a arranged at a dilute-solution dispensing position. Then, the blood and the dilute solution are dispensed respectively to a specimen vessel 45. After the dispensing, the specimen vessel 45 containing diluted blood is transported to a specimen/reagent dispensing position 46.

On the other hand, plural microplates 12 placed in a microplate storage unit 47 are transported by a transport mechanism 48 sequentially to the specimen/reagent dispensing position 46.

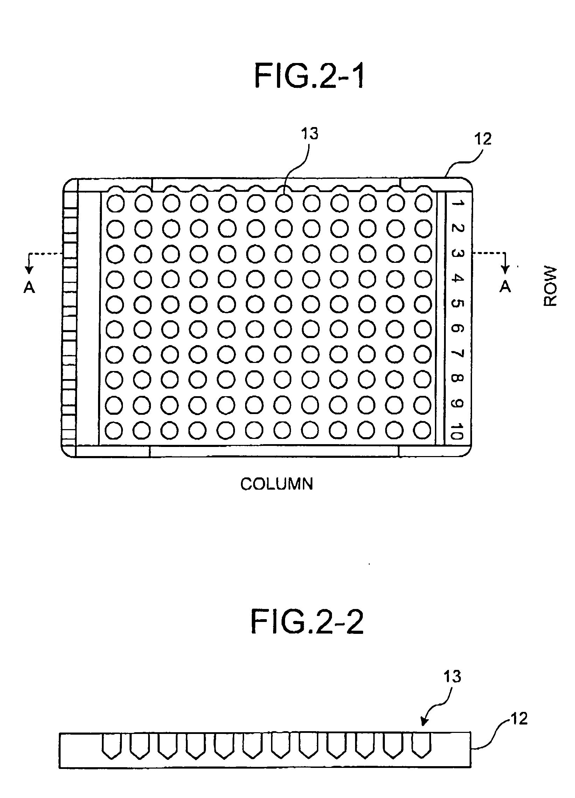

FIG. 2-1 is a plan view of the microplate 12, and FIG. 2-2 is a sectional view along line A-A of FIG. 2-1. As shown in FIGS. 2-1 and 2-2, on the microplate 12, reaction vessels 13 are formed and arranged in a matrix of 12 columns and 10 rows. A part of the bottom surface of the reaction vessel 13 is formed as a slanted surface.

The specimen vessel 45 and the microplate 12 stop at the specimen/reagent dispensing position 46. At the specimen/reagent dispensing position 46, the specimen stored in the specimen vessel 45 is dispensed by a specimen nozzle 49 into a reaction vessel 13 formed on the microplate 12. Further, a required reagent is dispensed into the reaction vessel 13 by a reagent dispensing nozzle 50 according to a variety of analysis items.

After the dispensing is finished, the microplate 12 is transported by the transport mechanism 48 into a reaction line 51. The reaction line 51 includes an up-down mechanism 52. Plural microplates 12 to which the diluted specimen and the reagent are dispensed are stored in the reaction line until a necessary reaction time for each analysis item elapses. Thus, blood cell particles, latex particles, and the like in the specimen are agglutinated by the antigen-antibody reaction. After the agglutination reaction finishes, the microplate 12 is transported by a transport mechanism 53, and stops at a photometric position 54. At the photometric position 54, a CCD camera 57 detects difference in agglutination patterns formed on the bottom surfaces of the reaction vessels 13.

As shown in FIG. 1, the liquid level detecting apparatus 10 is arranged at the specimen/reagent dispensing position 46 in the analysis process. In the embodiment, the liquid level detecting apparatus 10 detects a position of a liquid surface of a mixed liquid of the specimen and the reagent dispensed into each of the reaction vessels 13 on the microplate 12 (hereinafter, simply referred to as "mixed liquid").

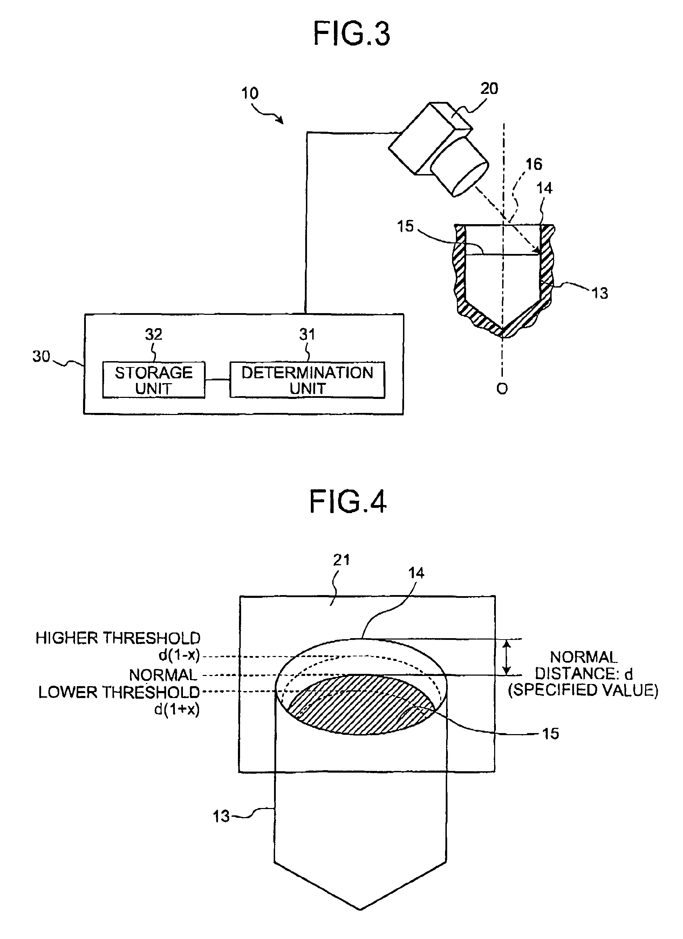

FIG. 3 is a schematic diagram of a configuration of the liquid level detecting apparatus 10 of the present invention. For the convenience of description, one of the reaction vessels 13 formed on the microplate 12 is shown in a magnified scale. FIG. 4 is a diagram of an example of an imaging range of an imager 20.

As shown in FIG. 3, the liquid level detecting apparatus 10 includes the imager 20 and an image processor 30. In the embodiment, the imager 20 is a CCD camera. The image processor 30 includes a determination unit 31 which determines whether a distance between an opening edge of the vessel and the liquid surface in a taken image is within a preset threshold range or not, and a storage unit 32 which stores a reference image for determination described later.

As shown in FIGS. 3 and 4, the CCD camera 20 is arranged at a predetermined position where a vessel opening edge 14 of the reaction vessel 13 and a liquid surface 15 of the mixed liquid come within an imaging range 21, and takes an image of an inside of the reaction vessel 13 from this position.
In FIGS. 3 and 4, the CCD camera 20 is arranged obliquely upward from the reaction vessel 13. An imaging optical axis 16 of the CCD camera 20 is slanted relative to and intersects with a central axis 0 of the reaction vessel. The distance between the CCD camera 20 and the reaction vessel 13 and the angle formed by the CCD camera 20 relative to the reaction vessel 13 are determined as appropriate in consideration of the resolution of the camera, the color of the liquid, and the like.

Image data obtained by the CCD camera 20 is input to the image processor 30. After appropriate processing, the image data is sent to the determination unit 31. For the convenience of description, the obtained image is called "image C". The processing in the determination unit 31 can be performed as follows, for example.

As shown in FIG. 4, a normal distance (specified value) between the opening edge 14 of the reaction vessel 13 and the liquid surface 15 is represented by d, an error rate is represented by x, a higher threshold is represented as d(1-x), and a lower threshold is represented as d(1+x). An appropriate numerical value is assigned to x depending on a condition.
The storage unit 32 stores therein in advance a reference image A which is obtained through taking an image of the inside of the reaction vessel 13 storing the liquid of an amount of the higher threshold d(1-x), and a reference image B which is obtained through taking an image of the inside of the reaction vessel 13 storing the liquid of an amount of the lower threshold d(1+x). An imaging position of the reference images A and B is the same with the imaging position of the image C mentioned above (in other words, the images are taken at the same distance and angle relative to the reaction vessel 13).

Then, the distance between the opening edge and the liquid surface on the image C is compared with the distance between the opening edge and the liquid surface on the reference image A, and it is determined whether the distance between the opening edge and the liquid surface on the image C is longer than the higher threshold or not. Further, the distance between the opening edge and the liquid surface on the image C is compared with the distance between the opening edge and the liquid surface on the reference image B, and it is determined whether the distance between the opening edge and the liquid surface on the image C is longer than the lower threshold or not.
When the distance between the opening edge and the liquid surface on the image C is within a threshold range as described above, the data is adopted as analysis data. When the distance is shorter than the higher threshold, it is determined that the liquid amount is excessively large. On the other hand, when the distance is longer than the lower threshold, it is determined that the liquid amount is excessively small. These data are output as an error and excluded from the analysis data.

A series of processing as described above is performed for each of the reaction vessels 13 on the microplate 12. Every time an image of one reaction vessel 13 is taken, the CCD camera 20 or the microplate 12 is moved and secured so that the CCD camera 20 comes to a predetermined position where the opening edge 14 of each reaction vessel and the liquid surface 15 come into the imaging range 21. The CCD camera 20 takes an image of an inside of each of the reaction vessels 13 from this position. Every time the image is taken, the CCD camera 20 must be fixed at the same position relative to each reaction vessel 13, in other words, at the same angle and the same distance relative to the reaction vessel 13.
According to an exemplary image-taking technique, the CCD camera 20 may be moved in a lengthwise direction every time an image of one of the twelve reaction vessels 13 arranged in a column is taken. After the images of the liquid surfaces of all the reaction vessels 13 in the column are taken, the microplate 12 is moved in a crosswise direction, so that the image of the next column is taken. Other technique may also be adopted.

The processing in the determination unit 31 is not limited by the embodiment, and can be modified within a range not departing from the concept of the present invention.

In the embodiment, the position of the liquid surface of the mixed liquid of the reagent and the specimen in the reaction vessel 13 is detected. The liquid level detection may be performed after the specimen is dispensed before the reagent is dispensed. When the specimen and the reagent are dispensed in a reverse order, the liquid level detection may be performed after the reagent is dispensed before the specimen is dispensed. Further, the above-described liquid level detection can be employed for the detection of the liquid surface in the specimen vessel 45 to which the blood as the specimen and the dilute solution are dispensed.

Further, the number and the shape of the reaction vessels 13 formed on the microplate 12 are not limited by the embodiment. For example, the present invention is applicable to the reaction vessel 13 whose bottom surface has a semi-circular, rectangular, or a V-shaped vertical section.

### INDUSTRIAL APPLICABILITY

As described above, the liquid level detecting apparatus of the present invention is applicable to a microplate on which plural reaction vessels are arranged and formed, or a metallic vessel which does not transmit light.

## Claims

1. A liquid level detecting apparatus for detecting a liquid surface of a liquid stored in a vessel, taking an image of an inside of the vessel from a predetermined position where an opening edge of the vessel and the liquid surface come into an imaging range, and determining whether a distance between the opening edge of the vessel and the liquid surface in a taken image is within a preset threshold range or not.

2. The liquid level detecting apparatus according to claim 1, wherein an imager for taking an image of the opening edge of the vessel and the liquid surface is arranged obliquely upward of the vessel.
